# EUROPEAN PATENT APPLICATION

(11) **EP 0 526 820 A1**
(43) Date of publication of application: **10.02.1993**
(21) Application number: 92112788.2
(22) Date of filing: 27.07.1992
(51) Int. Cl.: D03C 3/42, B65H 57/14, B65H 59/36, F16C 33/60

(54) **Element with two return pulleys for textile machinery**

(30) Priority: 06.08.1991 IT TO910626
(71) Applicant: SKF INDUSTRIE S.P.A., I-10123 Torino (IT)
(72) Inventor: Campanale, Michele, I-10127 Torino (IT); Maselli, Vito Carlo, I-70026 Modugno (BA) (IT)
(74) Representative: Lotti, Giorgio

(57) **Abstract**

A thread-tensioner comprises a pair of rolling contact bearings (10) and a body or shell (12) to which the inner races (20) of the bearings are fixed. The outer race (22) of each bearing (10) has a groove (24) for receiving a thread.

## Description

The field of the present invention is that of textile machineries; precisely, it refers to a thread-tensioner with rolling-contact bearings.

At present, thread-tensioning devices are generally made up by an elongated outer body or shell at the far ends of which two pulleys are mounted on respective pins fitted on the shell. In operation, the thread-tensioner is suspended by two threads, each one of them is wound in one of the pulleys and runs in either ways according to the tensions transmitted by the textile machine.

These traditional devices have the drawback that with time encrustments form due to polluting agents such as dirt and dust in suspension in the air. Said encrustments are a source of friction that is detrimental to the thread-tensioner and that can cause the pulley to block, so the device has to be replaced quite frequently. Therefore, as the thread-tensioner wears out quickly, it must be cheked-up very often.

A purpose of the present invention is to disclose a thread-tensioning device that overcomes the aforesaid drawbacks, needs little maintainance and is very smooth-running for the threads.

For these and other purposes and advantages that will appear more clearly with the following description, this invention discloses a thread-tensioner characterized in that it comprises a pair of rolling contact bearings and a body or shell to which the inner races of said bearings are fixed, while the outer race of each bearing has a groove for receiving a thread.

A few different embodiments of the thread-tensioning device that is the object of this invention are going to be described referring to the enclosed drawings, in which:
fig. 1 is a section of a first embodiment of the thread-tensioner according to this invention;
fig. 2 is a side view of the device of fig. 1 according to arrow "A";
fig. 3 shows an enlarged view of a detail of fig.1;
fig. 4 is a section of a second embodiment of the thread-tensioner;
fig. 5 is an enlarged view of a detail of fig. 4;
fig. 6 is a section of a third embodiment;
fig. 7 is an enlarged view of a detail of fig. 6;
fig. 8 is a section of a fourth embodiment of the thread-tensioner;
fig. 9 is an enlarged view of a detail of fig. 8;
figs. 10 and 11 show two alternative embodiments of a component of the thread-tensioner.

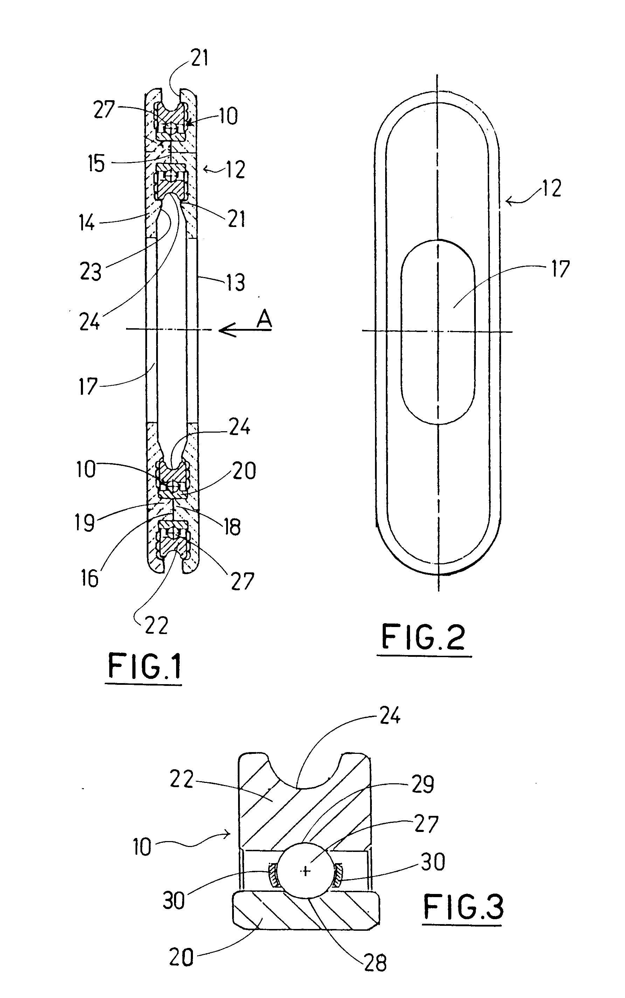

Referring to figs 1 and 2, a thread tensioner according to the invention is made up by a pair of ball bearings, indicated with reference number 10, that are located at the opposite ends of an elongated shell 12. Said shell is formed by the union of two complementary half-shells 13 and 14, welded together in 15 and 16. The half-shells are preferably realized in plastic material and each have an elongated central opening 17 and two protuberances 18 and 19, substantially cylindrical in shape. These protuberances are introduced in the centre of the inner races 20 of the ball bearings 10 and are successively welded together so as to form a solid block that locks the inner races 20. Moreover, the inner faces of the half-shells 13 and 14 are provided with circumferential projections 21 that face the bearings and close on the outer races of the bearings for protection against external polluting agents. The projections 21 have a sloping connecting zone 23 that joins them to the inner part of the shell and that act as a draft for the threads. The threads (not shown) are inserted in the central zone 25 of the thread-tensioner that is determined between the half-shells 13,14 and run inside a groove 24 that is obtained in each outer race 22.

The ball bearings that are used in the device according to this invention can also be shielded by plastic, rubber or metal shields to prevent infiltration of external polluting agents.

According to a different embodiment (not shown in the drawings), the protuberances of half-shells 13,14 can be a groove and tongue joint as an alternative to welding or sticking.

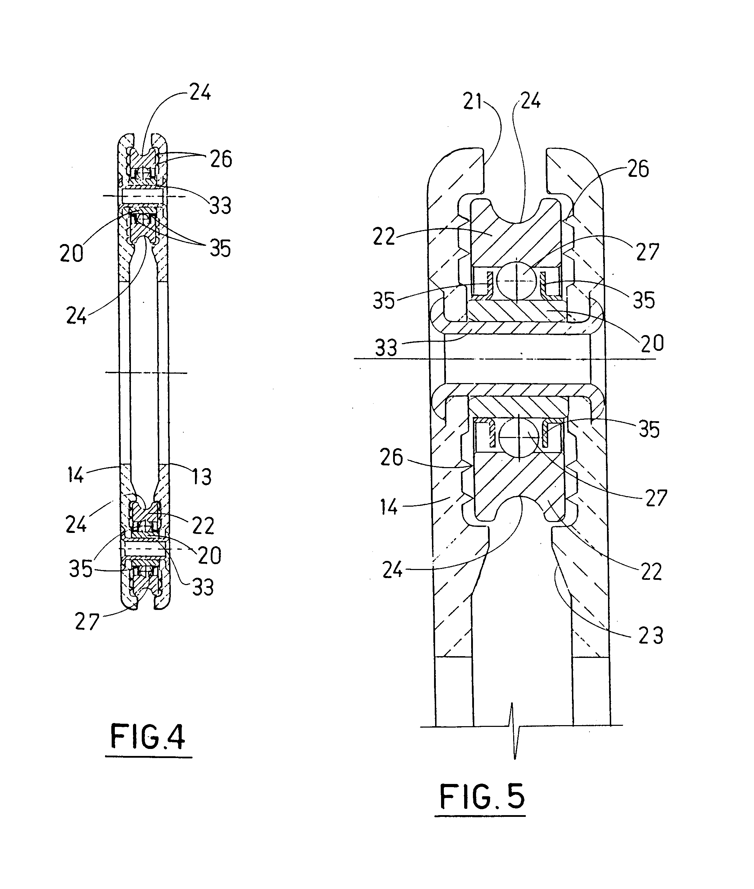

The inside walls of half-shells 13,14 are provided with a series of concentric circle relieves 26 in corrispondence of the outer races 22. These relieves have a substantially triangular section, as shown in figs. 5, 7 and 9 and act as a labyrinth to avoid infiltration of polluting agents. In fact dust and textile fibres in suspension in the air can damage the bearings.

Referring to fig. 3, the balls 27 of the bearing are fitted between the inner race 20 and the outer race 22 and run in special grooves 28 and 29 respectively obtained in races 20 and 22. According to the present embodiment, there are seven balls 27 in each bearing. The balls are axially locked by grooves 28,29 and by a cage 30 that maintains the correct circumferential distance between the balls. The cage 30 can be made of plastic or metal, as a unit or by joining two half- cages.

In the different embodiment shown in fig. 4 and 5 the two half-shells 13,14 instead of being welded or ultrasonic soldered as in the previous example, are joined by a pair of rivets 33. Consequently, the protuberances 18 and 19 (fig. 1) are missing.

A cost-effective solution is shown in fig. 5, where the cage 30 has been eliminated and the number of balls has been brought up from seven to thirteen. The inner race 20 is perfectly cylindrical and more economical to produce as the groove 28 is missing. The inside part of race 20 is locked by rivet 33, while the outside surface that contacts the balls carries a couple of restraining rings 35 with a L shaped section. These rings, that are preferably realized in sheet metal, face the balls 27 so as to avoid axial movements thereof and to prevent inner race 20 from getting lose.

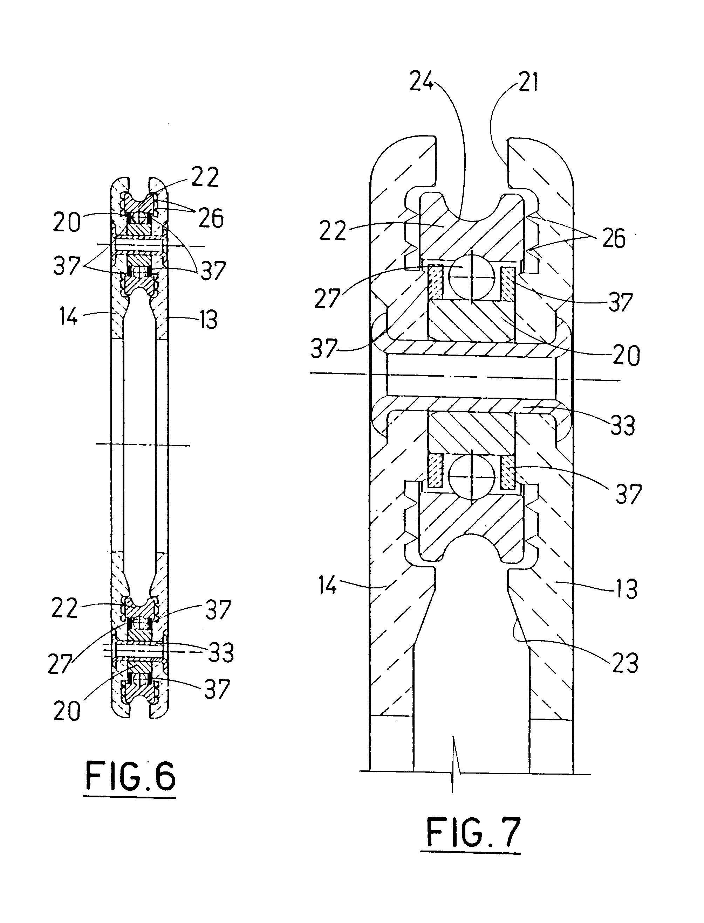

Figs. 6 and 7 show another embodiment, in which the union of half-shells 13,14 is still realized by means of two rivets 33, but the inner race 20 has no grooves and is fitted with a couple of restraining rings 37, cylindrical in shape, that face the balls 27. These rings have a rectangular section and are preferably made out of a plastic lamina.

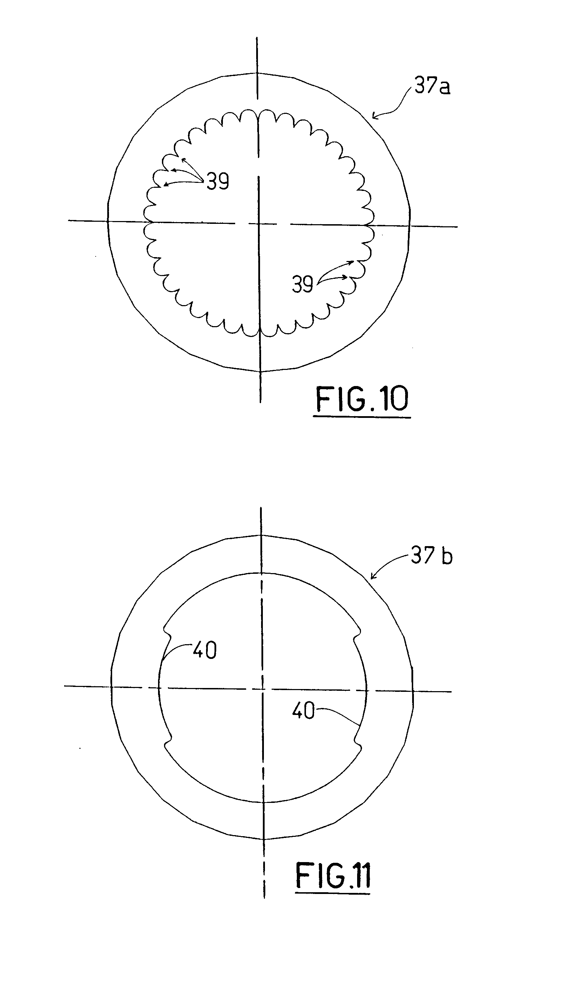

According to this invention, figs. 10 and 11 show two side views of two different embodiments of the restraining rings 37.

Referring to fig. 10, a ring 37a has a series of radial ridges 39 disposed on the inner surface of said ring. Said ring is forcefully fitted on the inner race 20 of the bearing so that the ridges 39 are compressed and ensure the union of the two pieces. Alternatively, a restraining ring 37b, shown in fig.11, can be used. Here, the contact with the inner race 20 is limited to two opposite radial enlargements 40 that grip the external surface of race 20.

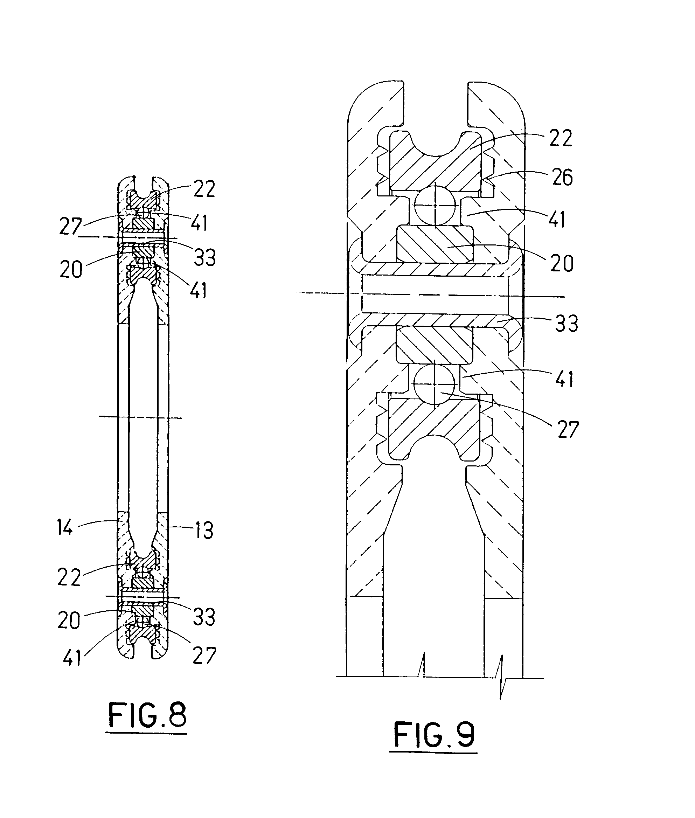

A further alternative embodiment of the thread-tensioner according to this invention is shown in figs. 8 and 9. In this example the restraining rings 37 have been eliminted and have been operatively replaced by circumferential edges 41 that stick out of half-shells 13,14. Also in this example the race 20 has no grooves and so is perfectly smooth and cylindrical in shape. Its axial cross section is small- ler than that of the outer race 22 that necessarily has to be wide enough for the groove 24 to be obtained therein.

In operation, due to the fact that the thread-tensioner is a hanging member, the loads are purely radial. In fact the thread-tensioner tends to line up automathically with the resultant of the tensions inside the threads that engage it.

In another embodiment (not shown) of the thread-tensioner according to the present invention the balls 27 are replaced by a set of rolls. The result is cost-effective, as no groove 29 has to be obtained in the inner surface of outer race 22, so there is one operation less to be carried out in completing the device.

## Claims

1. A thread-tensioner characterized in that it comprises a pair of rolling contact bearings (10) and a body or shell (12) to which the inner races (20) of said bearings are fixed, while the outer race (22) of each bearing (10) has a groove (24) for receiving a thread.

2. A device according to claim 1 wherein the rolling contact bearings (10) are ball bearings provided with axial locking means.

3. A device according to claim 1 wherein said body or shell (12) is formed by the union of two complementary half-shells (13,14).

4. A device according to claims 1, 2 and 3 wherein the half-shells (13,14) have protuberances (18,19) substantially cylindrical in shape designed for being welded, stuck or fixed together so as to lock the inner race (20) of the bearings (10); said axial locking means being formed by a metal or plastic cage (30).

5. A device according to claims 1 and 3 wherein the two half-shells (13,14) are joined by two rivets (33) that lock the inner races (20) of the bearings (33).

6. A device according to claims 1, 2 and 3 wherein said inner races (20) have perfectly cylindrical outer rolling surfaces.

7. A device according to claims 1, 2 and 6 wherein said axial locking means are restraining rings (35) with a L shaped section, that are fixed to said inner race (20) and face the balls (27).

8. A device according to claims 1, 2 and 6 wherein said axial locking means are rings (37) the innermost surfaces of which are provided with yielding radial ridges (39,40).

9. A device according to claims 1, 2, 3 and 6 wherein said axial locking means are circumferential edges (41) that stick out of said half-shells (13,14) axially.

10. A device according to claim 1 wherein the rolling-contact bearings are roller bearings.

11. A device according to claim 1 wherein said shell (12) is provided with polluting agents stopping means.

12. A device according to claim 11 wherein said polluting agents stopping means are concentric circumferential relieves (26).

13. A device according to claim 1 wherein said bearings (10) can be shielded with metal, plastic or rubber shields.
